# EUROPEAN PATENT APPLICATION

(11) **EP 4 779 580 A1**
(43) Date of publication of application: **22.07.2026**
(21) Application number: 24864660.6
(22) Date of filing: 11.09.2024
(51) Int. Cl.: G06V 10/22, G06V 10/764, G06N 3/04, G06N 3/048

(54) **METHOD AND DEVICE FOR GENERATING SHELF DISPLAY GRID REGION**

(30) Priority: 12.09.2023 CN 202311175471
(71) Applicant: Shanghai Hanshi Information Technology Co., Ltd., Shanghai 200120 (CN)
(72) Inventor: HUANG, Sheng, Shanghai 200120 (CN); DING, Kun, Shanghai 200120 (CN); ZHUANG, Yitang, Shanghai 200120 (CN)
(74) Representative: Patentanwälte Olbricht Buchhold Keulertz
(86) International application number: PCT/CN2024/118293
(87) International publication number: WO 2025/055946

(57) **Abstract**

The present disclosure discloses a method and apparatus for generating shelf display grid areas. The method comprises: acquiring a shelf image to be detected and recognized; inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of a grid area bounding box label dataset; and outputting information of the detected bounding boxes for the shelf display grid areas. The present disclosure can use the grid detection model to directly detect possible grid areas on a shelf image, improving the efficiency and accuracy of grid area generation.

## Description

### RELATED APPLICATION

This application claims priority to Chinese Patent Application No. 202311175471.1, filed on September 12, 2023, which is herein incorporated by reference in its entirety.

### TECHNICAL FIELD

The present disclosure relates to the technical field of intelligent shelves, and in particular, to a method and apparatus for generating shelf display grid areas.

### BACKGROUND

This section is intended to provide background or context for the embodiments set forth in the claims. The description herein is not admitted to be prior art merely because it is included in this section.

With the continuous development of artificial intelligence technology, the supermarket industry is also continuously transforming toward intelligence and digitization. The application of AI technology enables supermarkets to better meet customer needs, improve operational efficiency, enhance user experience, and further expand the market influence of supermarkets. Through the application of artificial intelligence algorithms, supermarkets can analyze and predict consumer demand in real time, formulate marketing strategies more accurately to meet consumer needs, thereby increasing sales and customer satisfaction. Supermarkets can also use AI technology to automate inventory management, reduce inventory costs and shelf stagnation rates, and quickly replenish goods when necessary to ensure customers' shopping needs are met.

An intelligent shelf is a novel intelligent retail tool with intelligent analysis and automated management functions, capable of meeting various needs of supermarkets such as facings analysis and product identification. By monitoring and data analysis of products on the shelf in real time, intelligent shelves can improve shelf utilization, optimize inventory management, and enhance customer shopping experience, thereby improving the operational efficiency of supermarkets. Intelligent shelves have become an important component of intelligent retail in supermarkets and an important trend in the future development of supermarkets.

In intelligent shelves, shelf display grids are an important component of intelligent shelf management because the grids can be used for subsequent display supervision and out-of-stock management. How to accurately generate grids for multiple products on each shelf is currently a challenging problem in intelligent shelf systems. Common methods include: manually configuring grids in the backend system, which is very inefficient, and manually configured grids are generally fixed and difficult to maintain, often not matching the actual product placement on the shelf; or, generating grids by using the position of each price tag on the shelf, but in practice, the placement of price tags deviates from the actual products to a certain extent, or grids may be missing due to missed detection of price tags, resulting in inaccurate grid generation.

### SUMMARY

Embodiments of the present disclosure provide a method for generating shelf display grid areas, to efficiently and accurately generate shelf display grid areas. The method includes:
acquiring a shelf image to be detected and recognized;
inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of a grid area bounding box label dataset; and
outputting information of the detected bounding boxes for the shelf display grid areas.

Embodiments of the present disclosure also provide an apparatus for generating shelf display grid areas, to efficiently and accurately generate shelf display grid areas. The apparatus includes:
an acquisition unit, configured to acquire a shelf image to be detected and recognized;
a detection unit, configured to input the shelf image to be detected and recognized into a pre-trained grid detection model, and detect the shelf image to be detected and recognized to obtain bounding boxes for grid areas; wherein the grid detection model is pre-trained based on historical shelf image datasets and corresponding samples of the grid area bounding box label dataset; and
a generation unit, configured to output information of the detected bounding boxes for the grid areas.

Embodiments of the present disclosure also provide a computer device, including a memory, a processor, and a computer program stored on the memory and executable on the processor. When the processor executes the computer program, the aforementioned method for generating shelf display grid areas is implemented.

Embodiments of the present disclosure also provide a computer-readable storage medium storing a computer program. When the computer program is executed by a processor, the aforementioned method for generating shelf display grid areas is implemented.

Embodiments of the present disclosure also provide a computer program product, including a computer program. When the computer program is executed by a processor, the aforementioned method for generating shelf display grid areas is implemented.

In the embodiments of the present disclosure, the solution for generating shelf display grid areas, compared with the technical solutions in the prior art where manually dividing grids in the backend system is inefficient or generating grids using price tag positions is inaccurate, includes: acquiring a shelf image to be detected and recognized; inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of the grid area bounding box label dataset; and outputting information of the detected bounding boxes for the shelf display grid areas. The present disclosure can use the grid detection model to directly detect possible grid areas on a shelf image, improving the efficiency and accuracy of grid area generation.

### BRIEF DESCRIPTION OF THE DRAWINGS

To describe the technical solutions in the embodiments of the present disclosure or the prior art more clearly, the following briefly introduces the accompanying drawings required for describing the embodiments or the prior art. Apparently, the accompanying drawings in the following description show merely some embodiments of the present disclosure, and a person of ordinary skill in the art may still derive other drawings from these accompanying drawings without creative efforts. In the drawings:
FIG. 1 is a schematic flowchart of a method for generating shelf display grid areas according to an embodiment of the present disclosure;
FIG. 2 is a schematic diagram of labeling grid areas according to an embodiment of the present disclosure;
FIG. 3 is a schematic diagram of labeling grid areas according to another embodiment of the present disclosure;
FIG. 4 is a schematic diagram of labeling grid areas according to yet another embodiment of the present disclosure;
FIG. 5 is a schematic diagram of labeling product positions according to an embodiment of the present disclosure;
FIG. 6a is a schematic diagram before correction and adjustment of grid bounding boxes according to an embodiment of the present disclosure;
FIG. 6b is a schematic diagram after correction and adjustment of grid bounding boxes according to an embodiment of the present disclosure; and
FIG. 7 is a schematic structural diagram of an apparatus for generating shelf display grid areas according to an embodiment of the present disclosure.

### DETAILED DESCRIPTION OF THE EMBODIMENTS

To make the objectives, technical solutions, and advantages of the embodiments of the present disclosure clearer, the following further describes the embodiments of the present disclosure in detail with reference to the accompanying drawings. Here, the illustrative embodiments of the present disclosure and their descriptions are used to explain the present disclosure, but should not be construed as limiting the present disclosure.

To better understand the present disclosure, nouns involved in the embodiments of the present disclosure are first introduced.

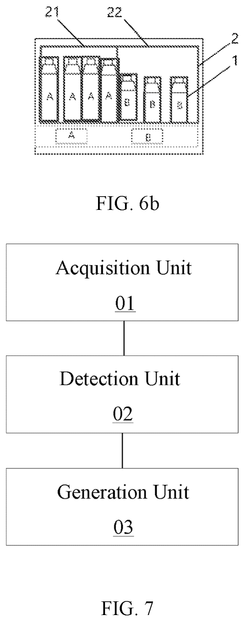

Product bounding box: A rectangular box that can exactly enclose a product facing, such as "1" in FIG. 6b.

Product grid area: In actual supermarket display, the area occupied by the same type of product when fully stocked.

Grid bounding box: Such as "2" in FIG. 6b.

Shelf image dataset: A set containing multiple images, each image being captured facing the shelf surface.

Product image dataset: A set containing multiple images, each image being a small image of a single product.

Grid bounding box label dataset: An information set describing the boundaries of multiple rectangular boxes in multiple images, where each image is captured facing a shelf surface, and each rectangular box represents the range of a product grid area.

Product bounding box label dataset: An information set describing the boundaries of multiple rectangular boxes in multiple images, where each image is captured facing the shelf surface, and each rectangular box represents the range of a product facing.

Product category label dataset: An information set describing the category information of multiple product images.

Considering the technical problems existing in the prior art, embodiments of the present disclosure provide a solution for generating shelf display grid areas, which can obtain accurate product grids in intelligent shelf and digital display systems. The solution for generating shelf display grid areas is described in detail below.

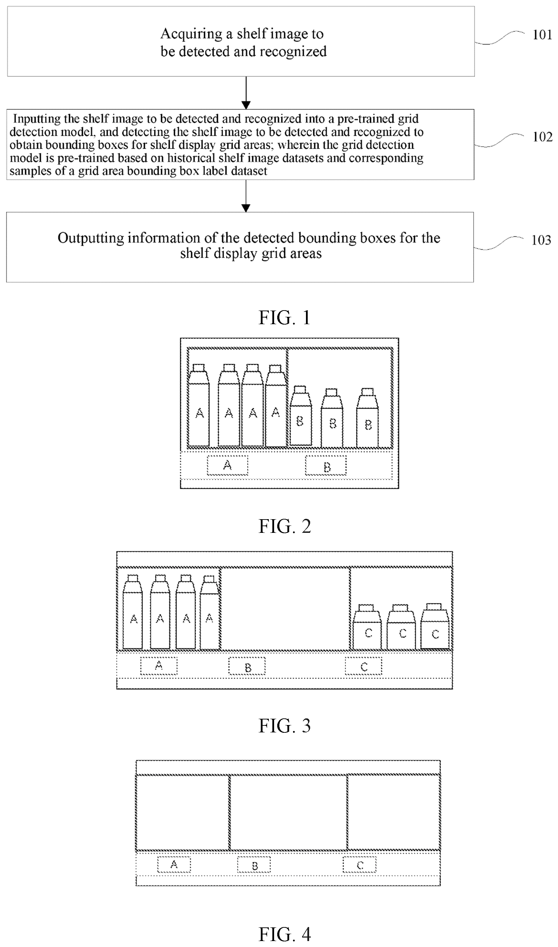

FIG. 1 is a schematic flowchart of a method for generating shelf display grid areas according to an embodiment of the present disclosure. As shown in FIG. 1, the method includes the following steps:
Step 101: Acquiring a shelf image to be detected and recognized.
Step 102: Inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of a grid area bounding box label dataset.
Step 103: Outputting information of the detected bounding boxes for the shelf display grid areas.

When working, the method for generating shelf display grid areas provided by the embodiments of the present disclosure: acquires a shelf image to be detected and recognized; inputs the shelf image to be detected and recognized into a pre-trained grid detection model, and detects the shelf image to be detected and recognized to obtain bounding boxes for shelf display grid areas; wherein the grid detection model is pre-trained based on historical shelf image datasets and corresponding samples of the grid area bounding box label dataset; and outputs information of the detected bounding boxes for the shelf display grid areas.

Compared with the technical solutions in the prior art where manually dividing grids in the backend system is inefficient or generating grids using price tag positions is inaccurate, the method for generating shelf display grid areas provided by the embodiments of the present disclosure can use the grid detection model to directly detect possible grid areas on a shelf image, improving the efficiency and accuracy of grid area generation. Details are described below.

An embodiment of the present disclosure provides a method for generating shelf display grid areas. This method can obtain accurate product grids in intelligent shelf and digital display systems. The detailed steps are as follows:

### 1. Collect Shelf Images

Acquire shelf images to be detected and recognized (which can be historical shelf images during modeling), and collect them to form a shelf image dataset and a product image dataset. It should be understood that a shelf image is captured facing a shelf surface; a product image is a small image of each product cropped from the shelf image. During modeling, the collected historical shelf images form a historical shelf image dataset and a historical product image dataset.

### 2. Train and Obtain a Grid Detection Model

Annotate the product grids in each historical shelf image to form a grid bounding box label dataset, and use this dataset to train a grid detection model. The specific method is:
I) For each image in the image dataset (which can be the historical shelf image dataset when training the grid detection model), define a possible placement area of each type of product as the grid for that product, manually mark it as position label information, and finally form the grid bounding box label dataset.

A specific, exemplary method for defining product placement areas is: For a certain SKU (Stock Keeping Unit) product, such as product A and product B in FIG. 2, the areas formed by each type of product being clustered and lined up are marked as two separate grids respectively.

Specially, if B is sold out alone, as shown in FIG. 3, manually mark a possible grid area based on experience, referring to the information of nearby products and grids.

More specially, if several products in a row are sold out, as shown in FIG. 4, manually mark possible several grid areas based on experience.

Build a deep neural network model, where the backbone network used in the deep neural network model uses, but is not limited to, CNN-based models, VIT-based models; the specific detection method uses, but is not limited to, one-stage YOLO series detection methods or two-stage Faster R-CNN methods.

II) Use the aforementioned shelf image dataset (which can be the historical shelf image dataset during training) and the corresponding grid bounding box label dataset to train the network model based on the idea of regression and the optimization method of gradient backpropagation, to obtain the grid detection model. This model can predict all possible grid bounding boxes on the shelf.

From the above, it can be seen that in one embodiment, the aforementioned method for generating shelf display grid areas may further include: pre-training to obtain the grid detection model according to the following method:

acquiring historical shelf images and collecting them to form a historical shelf image dataset;

for each image in the shelf image dataset, defining the possible placement area of each type of product in the image as the grid for that product, marking and annotating the position label information of that grid, and finally forming a grid bounding box label dataset;
building a deep neural network model; and
using the shelf image dataset and the corresponding grid bounding box label dataset to train the deep neural network model based on the idea of regression and the optimization method of gradient backpropagation, to obtain the grid detection model, which is used to predict all possible grid area bounding boxes on the shelf.

In this embodiment, when training to obtain the grid detection model, the aforementioned shelf image dataset can be the historical shelf image dataset.

### 3. Train and Obtain a Product Detection Model

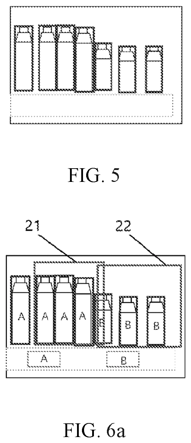

I) Annotate the position of products in each image (such as the bounding box of the product in FIG. 5) to form a product bounding box label dataset.
II) Use the aforementioned shelf image dataset (which can be the historical shelf image dataset during training) and the product bounding box label dataset to train a product detection model, to obtain the product detection model. This model can predict all possible product bounding boxes on the shelf. The detailed method is the same as described in the previous step.

In the training process of step 3, the aforementioned shelf image dataset can be the historical shelf image dataset. The aforementioned each image can be each image in the historical shelf image dataset.

From the above, it can be seen that in one embodiment, the aforementioned method for generating shelf display grid areas may further include: pre-training to obtain the product detection model according to the following method:
acquiring historical shelf images and collecting them to form a product image dataset;
for each image in the product image dataset, annotating the position of each type of product in the image to form a product bounding box label dataset; and
using the product image dataset and the corresponding product bounding box label dataset to train a pre-built deep neural network model to obtain the product detection model, which is used to predict all possible product bounding boxes on the shelf.

In one embodiment, the aforementioned method for generating shelf display grid areas may further include: pre-training to obtain the product detection model according to the following method:
acquiring historical shelf images and collecting them to form a historical shelf image dataset;
for each image in the historical shelf image dataset, annotating the position of each type of product in the image to form a product bounding box label dataset; and
using the historical shelf image dataset and the corresponding product bounding box label dataset to train a pre-built deep neural network model to obtain the product detection model, which is used to predict all possible product bounding boxes on the shelf.

### 4. Train and Obtain a Product Recognition Model

I) For the historical product image dataset, label each type of product image as a separate category, and finally form a product category label dataset.
II) Build a deep neural network model. The backbone network used in this model uses, but is not limited to, CNN-based models, VIT-based models. The backbone network model is followed by a classifier.
III) Use the historical product image dataset and the product category label dataset to train the network model based on the idea of maximum likelihood and loss functions for metric learning. Two models can be trained here: a product category recognition model and a product feature description recognition model. Among them: the input of the product category recognition model can be an image (a small image of a product), and the output can be a product category; the input of the product feature description recognition model can be an image (a small image of a product), and the output can be an image feature description.
IV) The final model can predict and output the possible category or feature description of each input image, i.e., the product category recognition model outputs the product category, and the product feature description recognition model outputs the feature description.

From the above, it can be seen that in one embodiment, the aforementioned method for generating shelf display grid areas may further include: pre-training to obtain the product category recognition model according to the following method:
for a product image dataset pre-collected based on historical shelf images, labeling each type of product image as a separate product category, and finally forming a product category label dataset;
building a deep neural network model; and
using the product image dataset and the product category label dataset to train the deep neural network model based on the idea of maximum likelihood and loss functions for metric learning, to obtain the product category recognition model.

During specific implementation, the category identified by this product category recognition model can be used to label the information corresponding to the generated grid. Of course, as described in the following embodiment, the identified product information can also be used to adjust the grid area, further improving the accuracy of grid area generation.

It should be understood that in the aforementioned process of training to obtain the product recognition model in this embodiment, the product image dataset can be the historical product image dataset.

### 5. Detect Grids

After completing the training of the grid detection model described above, deploy the model in the system, wait for image input, and perform inference on the input image. Specifically: use the grid detection model trained in the previous steps to perform inference and prediction on the real-time input image to obtain the placement area of each type of product on the shelf, i.e., the bounding box of the grid area.

### 6. Detect Products

After completing the training of the product detection model described above, deploy the model in the system, wait for image input, and perform inference on the input image. Specifically: use the product detection model to detect each product on the shelf and obtain the position bounding box of each product.

### 7. Recognize or Classify Products

According to the product bounding boxes in step 6, crop the image of each product from the large image to obtain a small image of a single product.

Recognize or classify the small image of each product; either one can be selected. The specific method is:
a) Recognition:
   Use the product category recognition model trained in step 4, input each cropped small image into the product category recognition model, and directly output the specific category by the classifier of the model. Finally, each product corresponding bounding box has a product category information.
b) Classification:
   I) Use the product feature description recognition model trained in step 4, input each cropped small image into the product feature description recognition model, and output the feature description of the image by the backbone of the model. The feature description includes, but is not limited to, a feature vector used to identify the product type.
   II) For each product on the shelf, compare its corresponding feature description with the feature descriptions of nearby products (products that have been compared and confirmed for category can be skipped), including but not limited to calculating Euclidean distance or cosine distance between feature vectors. Generally, the same type of product has a relatively high similarity in feature descriptions, so the same type of product can be classified or labeled as a separate category, such as product A, B, C, etc. Finally, label each product bounding box on the shelf as the classification result.

From the above, it can be seen that in one embodiment, the aforementioned method for generating shelf display grid areas may further include:
using a pre-trained product detection model to detect the shelf image to be detected and recognized, to obtain product bounding boxes; wherein the product detection model is pre-trained based on historical shelf image datasets and corresponding samples of a product bounding box label dataset;
cropping a small image of a single product from each detected product bounding box; and
inputting the small image of each product into a pre-established product category recognition model to perform recognition and obtain a product category recognition result corresponding to each product bounding box; or, inputting the small image of each product into a pre-established product feature description recognition model to perform classification and obtain a classification result corresponding to each product bounding box.

From the above, it can be seen that in one embodiment, inputting the small image of each product into a pre-established product feature description recognition model to perform classification and obtain a product category corresponding to each product bounding box may include:
inputting the small image of each product into a pre-established product feature description recognition model to obtain the feature description of the small image of each product; wherein the product feature description recognition model is used to predict the feature description of the input image;
for each product on the shelf, comparing the feature description corresponding to that product with the feature descriptions corresponding to nearby products of that product; and
taking products whose similarity is higher than a preset threshold as the same type of product, and classifying or labeling the same type of product as a separate category, finally labeling each product bounding box on the shelf with the corresponding category label as the classification result.

### 8. Adjust and Correct Grids

Since the grid bounding boxes generated in step 5 may deviate from the actual product placement to a certain extent, the results of product recognition or classification in step 7 can be used to correct and adjust the grid bounding boxes, achieving the effect from FIG. 6a to FIG. 6b.

The specific method is:
I) Determine the quantity of each SKU product within each grid, and set the product information of the SKU with the largest quantity as the product information corresponding to that grid. For example, the product information corresponding to grid 21 in FIG. 6a is A, and the product information corresponding to grid 22 in FIG. 6a is B.
**II)** Expand each grid outward: According to the product information corresponding to the grid (e.g., grid 21 in FIG. 6a), find the product belonging to that grid that is farthest outside the left boundary of the grid (the belonging product, such as A on the left side of 21 in FIG. 6a), and use the left boundary box of that product as the left border of the grid, i.e., the left side of grid 21 is expanded outward as shown in FIG. 6b; find the product belonging to that grid (e.g., grid 21 in FIG. 6a) that is farthest outside the right boundary of the grid, and use the right boundary box of that product as the right border of the grid; if not found (e.g., at this time, the products corresponding outside the right boundary of grid 21 are all product B, then it is considered that the product belonging to the grid that is farthest outside the right boundary of the grid is not found), then temporarily keep the grid border unchanged; record the outward expansion change record of the grid.
III) Shrink each grid inward: For each grid (e.g., grid 21 in FIG. 6a), determine whether its adjacent grids (e.g., grid 22 in FIG. 6b) have outward expansion change records (e.g., the left side of grid 21 is expanded outward, while the right side is not moved). If the adjacent grid (grid 22) has been expanded outward (according to step II) above, the left boundary of grid 22 is expanded outward) and intersects with the current grid (the right boundary of grid 21 intersects with the left boundary of grid 22), then shrink the right boundary box of the current grid (grid 21 in FIG. 6a) inward until it is adjacent to the adjacent grid without intersection, as shown in FIG. 6b after shrinking.

From the above, it can be seen that in one embodiment, the aforementioned method for generating shelf display grid areas may further include: correcting and adjusting the grid area bounding boxes according to the product category recognition results or classification results, to eliminate deviations between the generated grid area bounding boxes and the actual product placement.

During specific implementation, correcting and adjusting the grid area bounding boxes according to the product category recognition results or classification results can eliminate deviations between the generated grid area bounding boxes and the actual product placement, further improving the accuracy of grid area generation.

From the above, it can be seen that in one embodiment, correcting and adjusting the grid area bounding boxes according to the product category recognition results or classification results may include:
determining the quantity of each type of product within each grid area, and setting the product information of the type with the largest quantity as the product information corresponding to that grid;
performing an outward expansion operation on each grid: according to the product information corresponding to the current grid, find the product belonging to the current grid that is farthest outside the left boundary of the current grid, and use the left boundary box of the product that is farthest outside the left boundary of the current grid as the left border of the grid; according to the product information corresponding to the current grid, find the product belonging to the current grid that is farthest outside the right boundary of the current grid, and use the right boundary box of the product that is farthest outside the right boundary of the current grid as the right border of the grid; if not found, then temporarily keep the current grid border unchanged; record the outward expansion change record of the current grid; and
performing an inward shrinking operation on each grid: for each current grid, determine whether the grids on both sides of the current grid have outward expansion change records; if it is determined based on the outward expansion change records that the grid adjacent to the current grid has been expanded outward and intersects with the current grid, then shrink the bounding box of the current grid inward until it is adjacent to the adjacent grid without intersection, to obtain the result of correcting and adjusting the grid area bounding boxes.

During specific implementation, the specific implementation method of correcting and adjusting the grid area bounding boxes according to the product category recognition results or classification results described above can further improve the accuracy of grid area generation.

### 9. Output Grid Results

In one embodiment, the final output grid style is a rectangular box. It should be understood that to fully and effectively utilize the display space of the shelf, shelf display layout methods may include, but are not limited to, displaying products side by side to form a rectangular outline. According to different possible shelf display layout methods, grid areas may also have other shapes. For example, when products of the same category are stacked in a triangular shape, the grid area may be triangular. Correspondingly, the grid style can be a shape matching the grid area, i.e., in the above example, the grid style can be a triangular style matching the grid area, to accurately divide the grid area.

In one embodiment, when the grid style is a rectangular box, format each detected and adjusted bounding box into a certain format of information, such as the coordinates and width-height of the upper-left corner or center point of the bounding box in the image: (x, y, w, h), or the two diagonal coordinate points: (x1, y1, x2, y2). Output the bounding box information of all grid areas in the shelf image to subsequent units. From the above, it can be seen that in one embodiment, outputting the information of the detected bounding boxes for the shelf display grid areas may include:
converting the detected grid area bounding box information into grid bounding box information in a preset format; wherein the detected grid area bounding boxes are rectangular boxes; and
outputting the grid bounding box information in the preset format to subsequent usage units.

During specific implementation, converting the detected grid area bounding box information into grid bounding box information in a preset format and outputting it to subsequent usage units can facilitate those units to conveniently and quickly obtain grid information.

In summary, the beneficial technical effects of the embodiments of the present disclosure are:
**I)** Using the method of pre-training to generate a grid detection model to directly detect possible grid areas on a shelf image avoids the disadvantages of low efficiency, difficulty in maintenance, and inflexibility of the manual method of manually dividing grids in the system, and also avoids potential deviations in the method of directly using price tags to generate grids, such as grid omissions caused by missed detection of price tags, improving the efficiency and accuracy of grid generation.
II) Using the results of product recognition or classification on the shelf to adjust and correct grid ranges to obtain more accurate grid areas further improves the accuracy of grid generation.
**III)** The grid area can be various shapes matching possible product display styles to improve the utilization of display space.

Embodiments of the present disclosure also provide an apparatus for generating shelf display grid areas, as described in the following embodiments. Since the principle of solving the problem by this apparatus is similar to that of the method for generating shelf display grid areas, the implementation of this apparatus can refer to the implementation of the method for generating shelf display grid areas, and repeated descriptions are omitted.

FIG. 7 is a schematic structural diagram of an apparatus for generating shelf display grid areas according to an embodiment of the present disclosure. As shown in FIG. 7, the apparatus includes:
**an** acquisition unit 01, configured to acquire a shelf image to be detected and recognized;
a detection unit 02, configured to input the shelf image to be detected and recognized into a pre-trained grid detection model, and detect the shelf image to be detected and recognized to obtain bounding boxes for grid areas; wherein the grid detection model is pre-trained based on historical shelf image datasets and corresponding samples of the grid area bounding box label dataset; and
a generation unit 03, configured to output information of the detected bounding boxes for the grid areas.

In one embodiment, the aforementioned apparatus for generating shelf display grid areas may further include a grid detection model training unit, configured to pre-train to obtain the grid detection model according to the following method:
acquiring historical shelf images and collecting them to form a historical shelf image dataset;
for each image in the shelf image dataset, defining a possible placement area of each type of product in the image as the grid for that product, marking and annotating the position label information of that grid, and finally forming a grid bounding box label dataset;
building a deep neural network model; and
using the shelf image dataset and the corresponding grid bounding box label dataset to train the deep neural network model based on the idea of regression and the optimization method of gradient backpropagation, to obtain the grid detection model, which is used to predict all possible grid area bounding boxes on the shelf.

In this embodiment, when pre-training to obtain the grid detection model, the aforementioned shelf image dataset can be the historical shelf image dataset.

In one embodiment, the aforementioned apparatus for generating shelf display grid areas may further include:
a product detection unit, configured to use a pre-trained product detection model to detect the shelf image to be detected and recognized, to obtain product bounding boxes; wherein the product detection model is pre-trained based on historical shelf image datasets and corresponding samples of a product bounding box label dataset;
a cropping unit, configured to crop a small image of a single product from each detected product bounding box; and
a product category recognition or classification processing unit, configured to input the small image of each product into a pre-established product category recognition model to perform recognition and obtain a product category recognition result corresponding to each product bounding box; or, input the small image of each product into a pre-established product feature description recognition model to perform classification and obtain a classification result corresponding to each product bounding box.

In one embodiment, the aforementioned apparatus for generating shelf display grid areas may further include a product detection model training unit, configured to pre-train to obtain the product detection model according to the following method:
acquiring historical shelf images and collecting them to form a product image dataset;
for each image in the product image dataset, annotating the position of each type of product in the image to form a product bounding box label dataset; and
using the product image dataset and the corresponding product bounding box label dataset to train a pre-built deep neural network model to obtain the product detection model, which is used to predict all possible product bounding boxes on the shelf.

In this embodiment, when pre-training to obtain the product detection model, the product image dataset can be the historical product image dataset.

In one embodiment, the aforementioned apparatus for generating shelf display grid areas may further include a product category recognition unit, configured to pre-train to obtain the product category recognition model according to the following method:
for a product image dataset pre-collected based on historical shelf images, labeling each type of product image as a separate product category, and finally forming a product category label dataset;
building a deep neural network model; and
using the product image dataset and the product category label dataset to train the deep neural network model based on the idea of maximum likelihood and loss functions for metric learning, to obtain the product category recognition model.

In this embodiment, when pre-training to obtain the product category recognition model, the product image dataset can be the historical product image dataset.

In one embodiment, the product category recognition or classification processing unit may be specifically configured to:
input the small image of each product into a pre-established product feature description recognition model to obtain the feature description of the small image of each product; wherein the product feature description recognition model is used to predict the feature description of the input image;
for each product on the shelf, compare the feature description corresponding to that product with the feature descriptions corresponding to nearby products of that product; and
take products whose similarity is higher than a preset threshold as the same type of product, and classify or label the same type of product as a separate category, finally labeling each product bounding box on the shelf with the corresponding category label as the classification result.

In one embodiment, the aforementioned apparatus for generating shelf display grid areas may further include: an adjustment unit, configured to correct and adjust the grid area bounding boxes according to the product category recognition results or classification results, to eliminate deviations between the generated grid area bounding boxes and the actual product placement.

**In** one embodiment, the adjustment unit is specifically configured to:
determine the quantity of each type of product within each grid area, and set the product information of the type with the largest quantity as the product information corresponding to that grid;
perform an outward expansion operation on each grid: according to the product information corresponding to the current grid, find the product belonging to the current grid that is farthest outside the left boundary of the current grid, and use the left boundary box of the product that is farthest outside the left boundary of the current grid as the left border of the grid; according to the product information corresponding to the current grid, find the product belonging to the current grid that is farthest outside the right boundary of the current grid, and use the right boundary box of the product that is farthest outside the right boundary of the current grid as the right border of the grid; if not found, then temporarily keep the current grid border unchanged; record the outward expansion change record of the current grid; and
perform an inward shrinking operation on each grid: for each current grid, determine whether the grids on both sides of the current grid have outward expansion change records; if it is determined based on the outward expansion change records that the grid adjacent to the current grid has been expanded outward and intersects with the current grid, then shrink the bounding box of the current grid inward until it is adjacent to the adjacent grid without intersection, to obtain the result of correcting and adjusting the grid area bounding boxes.

In one embodiment, the generation unit is specifically configured to:
convert the detected grid area bounding box information into grid bounding box information in a preset format; wherein the detected grid area bounding boxes are rectangular boxes; and
output the grid bounding box information in the preset format to subsequent usage units.

**In** one embodiment, the grid area bounding boxes can also be various shapes matching possible product display styles. For example, triangular.

Embodiments of the present disclosure also provide a computer device, including a memory, a processor, and a computer program stored on the memory and executable on the processor. When the processor executes the computer program, the aforementioned method for generating shelf display grid areas is implemented.

Embodiments of the present disclosure also provide a computer-readable storage medium storing a computer program. When the computer program is executed by a processor, the aforementioned method for generating shelf display grid areas is implemented.

Embodiments of the present disclosure also provide a computer program product, including a computer program. When the computer program is executed by a processor, the aforementioned method for generating shelf display grid areas is implemented.

In the embodiments of the present disclosure, the solution for generating shelf display grid areas, compared with the technical solutions in the prior art where manually dividing grids in the backend system is inefficient or generating grids using price tag positions is inaccurate, includes: acquiring a shelf image to be detected and recognized; inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of the grid area bounding box label dataset; and outputting information of the detected bounding boxes for the shelf display grid areas. The present disclosure can use the grid detection model to directly detect possible grid areas on a shelf image, improving the efficiency and accuracy of grid area generation.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage, CD-ROM, optical storage, etc.) having computer-usable program code embodied therein.

The present disclosure is described with reference to flowchart illustrations and/or block diagrams of methods, apparatuses (systems), and computer program products according to embodiments of the present disclosure. It should be understood that each flow and/or block in the flowchart illustrations and/or block diagrams, and combinations of flows and/or blocks in the flowchart illustrations and/or block diagrams, can be implemented by computer program instructions. These computer program instructions may be provided to a processor of a general-purpose computer, a special-purpose computer, an embedded processor, or other programmable data processing apparatus to produce a machine, such that the instructions, which are executed via the processor of the computer or other programmable data processing apparatus, create means for implementing the functions specified in one or more flows of the flowchart and/or one or more blocks of the block diagram.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in one or more flows of the flowchart and/or one or more blocks of the block diagram.

These computer program instructions may also be loaded onto a computer or other programmable data processing apparatus to cause a series of operational steps to be performed on the computer or other programmable apparatus to produce a computer-implemented process such that the instructions which are executed on the computer or other programmable apparatus provide steps for implementing the functions specified in one or more flows of the flowchart and/or one or more blocks of the block diagram.

The specific embodiments described above further describe the objectives, technical solutions, and beneficial effects of the present disclosure in detail. It should be understood that the above descriptions are merely specific embodiments of the present disclosure and are not intended to limit the protection scope of the present disclosure. Any modifications, equivalent replacements, improvements, etc., made within the spirit and principles of the present disclosure shall be included within the protection scope of the present disclosure.

## Claims

1. A method for generating shelf display grid areas, **characterized by** comprising:
acquiring a shelf image to be detected and recognized;
inputting the shelf image to be detected and recognized into a pre-trained grid detection model, and detecting the shelf image to be detected and recognized to obtain bounding boxes for shelf display grid areas; wherein the grid detection model is pre-trained based on historical shelf image datasets and corresponding samples of a grid area bounding box label dataset; and
outputting information of the detected bounding boxes for the shelf display grid areas.

2. The method according to claim 1, **characterized by** further comprising pre-training to obtain the grid detection model according to the following method:
acquiring historical shelf images and collecting them to form a historical shelf image dataset;
for each image in the shelf image dataset, defining a possible placement area of each type of product in the image as a grid for that product, marking and annotating position label information of that grid, and finally forming a grid bounding box label dataset;
building a deep neural network model; and
using the shelf image dataset and the corresponding grid bounding box label dataset to train the deep neural network model based on an idea of regression and an optimization method of gradient backpropagation, to obtain the grid detection model, which is used to predict all possible grid area bounding boxes on a shelf.

3. The method according to claim 1, **characterized in that** the method further comprising:
using a pre-trained product detection model to detect the shelf image to be detected and recognized, to obtain product bounding boxes; wherein the product detection model is pre-trained based on historical shelf image datasets and corresponding samples of a product bounding box label dataset;
cropping a small image of a single product from each detected product bounding box; and
inputting the small image of each product into a pre-established product category recognition model to perform recognition and obtain a product category recognition result corresponding to each product bounding box; or, inputting the small image of each product into a pre-established product feature description recognition model to perform classification and obtain a classification result corresponding to each product bounding box.

4. The method according to claim 3, **characterized in that** the method further comprising: pre-training to obtain the product detection model according to the following method:
acquiring historical shelf images and collecting them to form a product image dataset;
for each image in the product image dataset, annotating a position of each type of product in the image to form a product bounding box label dataset; and
using the product image dataset and the corresponding product bounding box label dataset to train a pre-built deep neural network model to obtain the product detection model, which is used to predict all possible product bounding boxes on a shelf.

5. The method according to claim 3, **characterized in that** the method further comprising: pre-training to obtain the product category recognition model according to the following method:
for a product image dataset pre-collected based on historical shelf images, labeling each type of product image as a separate product category, and finally forming a product category label dataset;
building a deep neural network model; and
using the product image dataset and the product category label dataset to train the deep neural network model based on an idea of maximum likelihood and loss functions for metric learning, to obtain the product category recognition model.

6. The method according to claim 3, **characterized in that** inputting the small image of each product into a pre-established product feature description recognition model to perform classification and obtain a product category corresponding to each product bounding box, comprising:
inputting the small image of each product into a pre-established product feature description recognition model to obtain a feature description of the small image of each product; wherein the product feature description recognition model is used to predict a feature description of an input image;
for each product on the shelf, comparing the feature description corresponding to the product with feature descriptions corresponding to nearby products of that product; and
taking products whose similarity is higher than a preset threshold as a same type of product, and classifying or labeling the same type of product as a separate category, finally labeling each product bounding box on the shelf with a corresponding category label as a classification result.

7. The method according to claim 3, **characterized in that** the method further comprising: correcting and adjusting the grid area bounding boxes according to the product category recognition results or classification results, to eliminate deviations between the generated grid area bounding boxes and actual product placement.

8. The method according to claim 7, **characterized in that** correcting and adjusting the grid area bounding boxes according to the product category recognition results or classification results, comprising:
determining a quantity of each type of product within each grid area, and setting product information of a type with a largest quantity as product information corresponding to that grid;
performing an outward expansion operation on each grid: according to product information corresponding to a current grid, finding a product belonging to the current grid that is farthest outside a left boundary of the current grid, and using a left boundary box of the product that is farthest outside the left boundary of the current grid as a left border of the grid; according to the product information corresponding to the current grid, finding a product belonging to the current grid that is farthest outside a right boundary of the current grid, and using a right boundary box of the product that is farthest outside the right boundary of the current grid as a right border of the grid; if not found, then temporarily keeping a current grid border unchanged; recording an outward expansion change record of the current grid; and
performing an inward shrinking operation on each grid: for each current grid, determining whether grids on both sides of the current grid have outward expansion change records; if it is determined based on the outward expansion change records that a grid adjacent to the current grid has been expanded outward and intersects with the current grid, then shrinking the bounding box of the current grid inward until it is adjacent to the adjacent grid without intersection, to obtain a result of correcting and adjusting the grid area bounding boxes.

9. The method according to claim 1, **characterized in that** outputting information of the detected bounding boxes for the shelf display grid areas, comprising:
converting the detected grid area bounding box information into grid bounding box information in a preset format; wherein the detected grid area bounding boxes are rectangular boxes; and
outputting the grid bounding box information in the preset format to a subsequent usage unit.

10. The method according to claim 1, **characterized by** further comprising pre-training to obtain the grid detection model according to the following method:
acquiring historical shelf images and collecting them to form a historical shelf image dataset;
for each image in the historical shelf image dataset, defining the possible placement area of each type of product in the image as a grid for that product, marking and annotating position label information of that grid, and finally forming a grid bounding box label dataset;
building a deep neural network model; and
using the historical shelf image dataset and the corresponding grid bounding box label dataset to train the deep neural network model based on an idea of regression and an optimization method of gradient backpropagation, to obtain the grid detection model, which is used to predict all possible grid area bounding boxes on a shelf.

11. The method according to claim 3, **characterized in that** the method further comprising:
pre-training to obtain the product detection model according to the following method:
acquiring historical shelf images and collecting them to form a historical shelf image dataset;
for each image in the historical shelf image dataset, annotating a position of each type of product in the image to form a product bounding box label dataset; and
using the historical shelf image dataset and the corresponding product bounding box label dataset to train a pre-built deep neural network model to obtain the product detection model, which is used to predict all possible product bounding boxes on a shelf.

12. The method according to claim 3, **characterized in that** the method further comprising:
pre-training to obtain the product category recognition model according to the following method:
for a historical product image dataset pre-collected based on historical shelf images, labeling each type of product image as a separate product category, and finally forming a product category label dataset;
building a deep neural network model; and
using the historical product image dataset and the product category label dataset to train the deep neural network model based on an idea of maximum likelihood and loss functions for metric learning, to obtain the product category recognition model.

13. The method according to claim 1, **characterized in that** outputting information of the detected bounding boxes for the shelf display grid areas, comprising:
converting the detected grid area bounding box information into grid bounding box information in a preset format; wherein the detected grid area bounding boxes at least include rectangular boxes; and
outputting the grid bounding box information in the preset format to a subsequent usage unit.

14. An apparatus for generating shelf display grid areas, **characterized by** comprising:
an acquisition unit, configured to acquire a shelf image to be detected and recognized;
a detection unit, configured to input the shelf image to be detected and recognized into a pre-trained grid detection model, and detect the shelf image to be detected and recognized to obtain bounding boxes for grid areas; wherein the grid detection model is pre-trained based on historical shelf image datasets and corresponding samples of a grid area bounding box label dataset; and
a generation unit, configured to output information of the detected bounding boxes for the grid areas.

15. A computer device, comprising a memory, a processor, and a computer program stored on the memory and executable on the processor, **characterized in that** the processor executes the computer program to implement the method according to any one of claims 1 to 13.

16. A computer-readable storage medium, **characterized in that** the computer-readable storage medium stores a computer program, and the computer program, when executed by a processor, implements the method according to any one of claims 1 to 13.

17. A computer program product, **characterized in that** the computer program product comprises a computer program, and the computer program, when executed by a processor, implements the method according to any one of claims 1 to 13.
